# EUROPEAN PATENT APPLICATION

(11) **EP 2 597 441 A2**
(43) Date of publication of application: **29.05.2013**
(21) Application number: 12193690.0
(22) Date of filing: 21.11.2012
(51) Int. Cl.: G01L 1/22

(54) **Load cell and applications thereof**

(30) Priority: 22.11.2011 US 201113302879
(71) Applicant: Simmonds Precision Products, Inc., Vergennes, VT 05491 (US)
(72) Inventor: Buttolph, Martin Edwy, Middlebury, VT Vermont 05753 (US)
(74) Representative: Leckey, David Herbert

(57) **Abstract**

In one aspect, column load cells are described herein. In some embodiments, a column load cell comprises a load bearing column, a plurality of first strain gauges coupled to surfaces of the load bearing column for determining axial strain and a load receiving surface comprising a plurality of load guides, the load guides substantially aligned with the first strain gauges.

## Description

The present invention relates to load cells and, in particular, column loaded load cells.

Load cells are transducers used to convert force into measurable electrical signals. A variety of load cell classes are available, including mechanical load cells, strain gauge load cells, helical load cells, fiber optic load cells and piezo-resistive load cells. Given their lower cost and relative ease of construction, strain gauge load cells have come to dominate many load cell applications.

Strain gauge load cells often employ multiple strain gauges in their construction. Strain gauges are operable to undergo small mechanical deformation with an applied force, wherein the mechanical deformation results in a small change in gauge resistance proportional to the applied force. As a result, a strain gauge takes advantage of electrical conductance that is dependent not only on the electrical conductivity of the conductor, but the conductor's geometry as well.

In a conventional strain gauge construction, a continuous conductive strip of material or foil is arranged in alternating parallel lines or a grid pattern, such that stress in the direction of the orientation of the parallel lines results in a larger strain over the length of the conductor, thereby registering a larger change in resistance. The grid of parallel lines formed by the conductive strip is bonded to a thin backing, which is bonded directly to a test body. Strain experienced by the test body is transferred to the conductive grid, thereby permitting the strain gauge to respond with a change in electrical resistance. Successful and accurate operation of a strain gauge load cell is, therefore, dependent upon the load or stress applied to the load cell passing through the body of the cell at locations of the strain gauges for subsequent strain determination.

In some cases, however, loads applied to a load cell can pass through the body of the cell undetected, leading to load measurement errors. Off-axis or asymmetrical loading of a load cell, for example, can induce such errors.

In one aspect, column load cells are described herein. In some embodiments, a column load cell described herein can mitigate or inhibit load measurement errors resulting from load passing through the body of the load cell undetected or only partially detected.

In some embodiments, a column load cell described herein comprises a load bearing column, a plurality of first strain gauges coupled to surfaces of the load bearing column for determining axial strain and a load receiving surface comprising a plurality of load guides, the load guides substantially aligned with the first strain gauges. In some embodiments, the load guides comprise structures projecting from the load receiving surface. The structures, in some embodiments, project above the load receiving surface. Moreover, in some embodiments, a column load cell described herein further comprises a plurality of second strain gauges coupled to surfaces of the load bearing column for determining transverse or Poisson's strain, wherein the second strain gauges are aligned or substantially aligned with the load guides.

In another embodiment, a column load cell described herein comprises a load receiving surface and a load bearing column adjacent to the load receiving surface, the load bearing column comprising a plurality of surfaces separated by apertures in the load bearing column. A plurality of first strain gauges are coupled to the surfaces of the load bearing column separated by the apertures, wherein the first strain gauges are operable to determine axial strain. In some embodiments, the column load cell further comprises a plurality of second strain gauges coupled to the surfaces of the load bearing column separated by the apertures, wherein the second strain gauges are operable to determine transverse strain. In some embodiments, the load receiving surface of the load cell comprises a plurality of load guides substantially aligned with the first strain gauges and the second strain gauges.

In some embodiments of load cells described herein, the first and/or second strain gauges are coupled to a continuous backing. In some embodiments, for example, the first and/or second strain gauges have a spacing on the continuous backing commensurate with the desired position of the first and/or second strain gauges on the load bearing column.

In another aspect, a load transfer apparatus for use with various load cell constructions is described herein. In some embodiments, a load transfer apparatus comprises a load transfer surface comprising a plurality of load guides, the load guides having a spacing on the surface aligning or substantially aligning the load guides with strain gauges of a load cell coupled to the apparatus. In some embodiments, the load guides comprise structures projecting from the load transfer surface. The structures, in some embodiments, project above the load receiving surface.

In another aspect, methods for measuring a load are described herein. In some embodiments, a method of measuring a load comprises providing a column load cell comprising a load bearing column, a plurality of first strain gauges and second strain gauges coupled to surfaces of the load bearing column, the first strain gauges operable to determine axial strain and the second strain gauges operable to determine transverse strain, and a load receiving surface comprising a plurality of load guides aligned or substantially aligned with the first strain gauges and the second strain gauges. A load is applied to the column load cell and the path of the applied load is directed through the load bearing column under the first strain gauges and the second strain gauges with the load guides, wherein the first strain gauges and the second strain gauges sense strain resulting from the applied load. In some embodiments, substantially all of the applied load is directed through the load bearing column under the first strain gauges and the second strain gauges by the load guides. In some embodiments, the load is applied to the column load cell asymmetrically or in an off-axis manner.

In another embodiment, a method of measuring a load comprises providing a column load cell comprising a load receiving surface, a load bearing column adjacent to the load receiving surface, the load bearing column comprising a plurality of surfaces separated by apertures in the load bearing column, and a plurality of first strain gauges and second strain gauges coupled to the surfaces separated by the apertures, wherein the first strain gauges are operable to determine axial strain, and the second strain gauges are operable to determine transverse strain. A load is applied to the column load cell and passed through the load bearing column under the first strain gauges and the second strain gauges, wherein the first and second strain gauges sense strain resulting from the applied load. In some embodiments, substantially all of the applied load is directed through the load bearing column under the first strain gauges and the second strain gauges.

In another embodiment, a method of measuring a load comprises providing a column load cell comprising a load bearing column and a plurality of strain gauges coupled to the load bearing column and coupling a load transfer apparatus to the load cell, the load transfer apparatus comprising a load transfer surface comprising a plurality of load guides, the load guides having a spacing on the load transfer surface substantially aligning the load guides with the strain gauges of the load cell. A load is applied to the load transfer apparatus and passed through the load transfer apparatus to the load cell. The path of the applied load is directed with the load guides through the load bearing column of the load cell under the first strain gauges and the second strain gauges, wherein the first and second strain gauges sense strain resulting from the applied load. In some embodiments, substantially all of the load is directed through the load bearing column of the load cell under the first and second strain gauges by the load guides of the load transfer apparatus.

In another aspect, methods of making a load cell are described herein. In some embodiments, a method of making a load cell comprises providing a load bearing column and a load receiving surface adjacent to the load bearing column, coupling a plurality of strain gauges to surfaces of the load bearing column and providing a plurality of load guides on the load receiving surface, the load guides substantially aligned with the strain gauges.

In another embodiment, a method of making a load cell comprises providing a load bearing column and a load receiving surface adjacent to the load bearing column, forming a plurality of apertures in the load bearing column to provide a plurality of separated surfaces and coupling a plurality of strain gauges to the surfaces of the load bearing column separated by the apertures.

These and other embodiments are described in greater detail in the detailed description which follows.

### BRIEF DESCRIPTION OF THE DRAWINGS

Figure 1 illustrates first (axial) and second (transverse) strain gauges coupled to the load bearing column of a load cell according to one embodiment described herein.
Figure 2 illustrates a perspective view of column load cell according to one embodiment described herein.
Figure 3 illustrates a continuous backing comprising first (axial) and second (transverse) strain gauges and associated circuitry of a full Wheatstone bridge according to one embodiment described herein.
Figure 4 illustrates a diagram of a full Wheatstone bridge circuit incorporating first (axial) and second (transverse) strain gauges of a column load cell according to one embodiment described herein.
Figure 5 illustrates a perspective view of a column load cell according to one embodiment described herein.
Figure 6 illustrates compressive strain fields of a center loaded column load cell according to one embodiment described herein.
Figure 7 illustrates compressive strain fields of an asymmetrically loaded column load cell according to one embodiment described herein.
Figure 8 illustrates transverse strain fields of a center loaded column load cell according to one embodiment described herein.
Figure 9 illustrates transverse strain fields of an asymmetrically loaded column load cell according to one embodiment described herein.

### DETAILED DESCRIPTION

Embodiments described herein can be understood more readily by reference to the following detailed description and examples and their previous and following descriptions. Elements, apparatus and methods described herein, however, are not limited to the specific embodiments presented in the detailed description and examples. It should be recognized that these embodiments are merely illustrative of the principles of the present invention. Numerous modifications and adaptations will be readily apparent to those of skill in the art without departing from the spirit and scope of the invention.

### I. Load Cell Comprising Load Guides

In one aspect, column load cells are described herein. In some embodiments, a column load cell comprises a load bearing column, a plurality of first strain gauges coupled to surfaces of the load bearing column for determining axial strain and a load receiving surface comprising a plurality of load guides, the load guides substantially aligned with the first strain gauges. In some embodiments, the column load cell further comprises a plurality of second strain gauges coupled to surfaces of the load bearing column for determining transverse strain, wherein the second strain gauges are aligned or substantially aligned with the load guides.

In some embodiments, load guides of a column load cell described herein comprise structures projecting from the load receiving surface. The structures, in some embodiments, project above the load receiving surface. Load guide structures can project above the load receiving surface any desired height not inconsistent with the objectives of the present invention. Moreover, load guide structures can have any desired shape. In some embodiments, load guide structures have a polygonal cross-section including, but not limited to square, rectangular or trapezoidal. In some embodiments, structures of load guides are circular or elliptical in shape. Load guide structures, in some embodiments, comprise lugs.

In some embodiments of a column load cell described herein, the load guides are integral or continuous with the load receiving surface, such that an interface is not present between the load guides and the load receiving surface. In some embodiments, for example, the load guides are machined out of the load receiving surface. Alternatively, in some embodiments, the load guides are discontinuous with the load receiving surface. In some embodiments, an interface exists between the load guides and the load receiving surface. In some embodiments, for example, the load guides are bonded on the load receiving surface.

As illustrated further herein, load guides are operable to direct the path of an applied load through the load bearing column under the first strain gauges and the second strain gauges. In some embodiments, all or substantially all of the applied load is directed through the load bearing column under the first strain gauges and the second strain gauges by the load guides. In directing substantially all of the applied load through the load bearing column under the first strain gauges and the second strain gauges, the load guides can mitigate or inhibit load passing through the load bearing column undetected.

In some embodiments, the load receiving surface comprises at least four load guides, each load guide aligned or substantially aligned with first and second strain gauges on the load bearing column. In some embodiments, the load receiving surface comprises an even number of load guides greater than 4, wherein each load guide is aligned or substantially aligned with first and second strain gauges on the load bearing column. In some embodiments, the even number of load guides is a multiple of 4. Moreover, in some embodiments, at least one of the load guides of the load receiving surface is in facing opposition to another load guide. In some embodiments, each load guide is in facing opposition to another load guide.

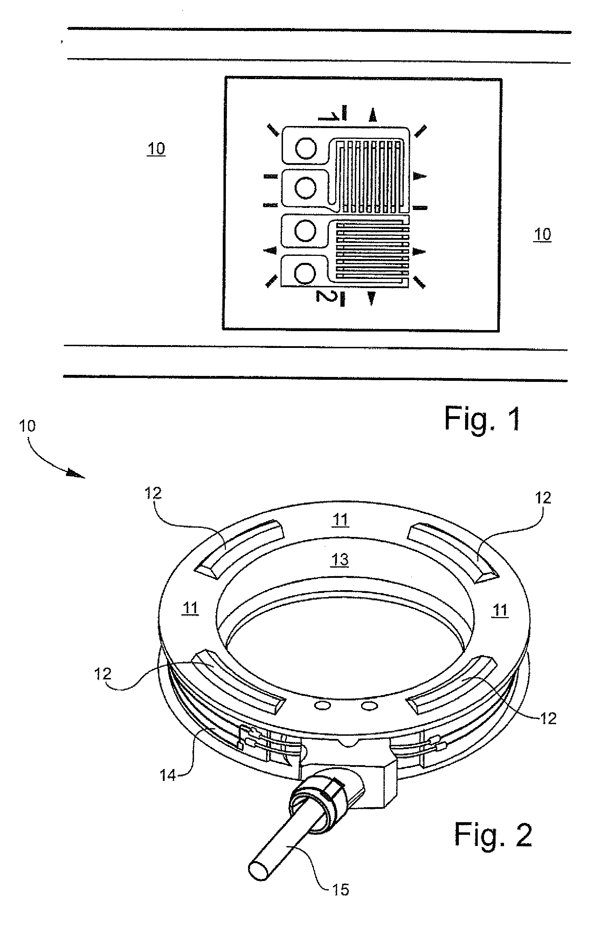

In some embodiments, the first strain gauges and the second strain gauges are adjacent to one another on surfaces of the load bearing column. Adjacent positioning of the first and second strain gauges, in some embodiments, can facilitate alignment of the first and second strain gauges with the load guides. In some embodiments, for example, the first and second strain gauges are adjacent to one another in a vertical format. In some embodiments, the first and the second strain gauges are adjacent to one another in a lateral format. Figure 1 illustrates first (1) and second (2) strain gauges coupled to a surface of the load bearing column (10) of a load cell according to one embodiment described herein. As illustrated in Figure 1, the first (1) and second (2) strain gauges are arranged adjacent to one another in a vertical format.

Moreover, in some embodiments, the load bearing column of a load cell described herein comprises interior surfaces and exterior surfaces. The first and second strain gauges, in some embodiments, are coupled to exterior surfaces of the load bearing column. In some embodiments, the first and second strain gauges are coupled to interior surfaces of the load bearing column. Additionally, in some embodiments, the first and second strain gauges are coupled to interior and exterior surfaces of the lead bearing column. In some embodiments, for example, the load bearing column has an annular cross-sectional shape having a continuous inner diameter surface and a continuous outer diameter surface. In some embodiments, the first and second strain gauges are coupled to the outer diameter surface at a plurality of locations. In some embodiments, the first and second strain gauges are coupled to the inner diameter surface at a plurality of locations. In some embodiments, the first and second strain gauges are coupled to the inner diameter surface and the outer diameter surface at a plurality of locations.

In some embodiments, a load cell described herein further comprises a Wheatstone bridge circuit incorporating the first strain gauges and the second strain gauges. In some embodiments, the Wheatstone bridge circuit is a full Wheatstone bridge circuit. Additionally, in some embodiments, the Wheatstone bridge circuit comprises a temperature compensation architecture.

Figure 2 illustrates a perspective view of a column load cell according to one embodiment described herein. As illustrated in Figure 2, the column load cell (10) comprises a load receiving surface (11) comprising a plurality of load guides (12). Each of the load guides (12) is arranged in facing opposition to another load guide (12) on the load bearing surface (11). The load cell (10) comprises a load bearing column (13) having an annular cross-sectional shape defining an open interior. A full Wheatstone bridge circuit (14) encircles the exterior surface the load bearing column (13) and incorporates first and second strain gauge pairs (not shown) aligned or substantially aligned with each of the load guides (12). In some embodiments, the first and second strain gauges aligned with each load guide (12) are adjacent to one another in a vertical format as illustrated in Figure 1. The Wheatstone bridge is connected to external processing circuitry through the cable assembly (15).

### II. Load Cell Ribbon Strain Gauge

In some embodiments, the Wheatstone bridge circuit (14) including the first and second strain gauge pairs aligned with each load guide (12) is coupled to a continuous backing. In some embodiments, for example, the continuous backing is ribbon-like in nature and does not interfere or substantially interfere with the ability of the first and second strain gauges to sense strain in the load bearing column resulting from an applied load. The first and second strain gauge pairs have a spacing along the continuous backing commensurate with achieving alignment of the first and second strain gauge pairs with each of the load guides (12) when the continuous backing is coupled to the load bearing column (13).

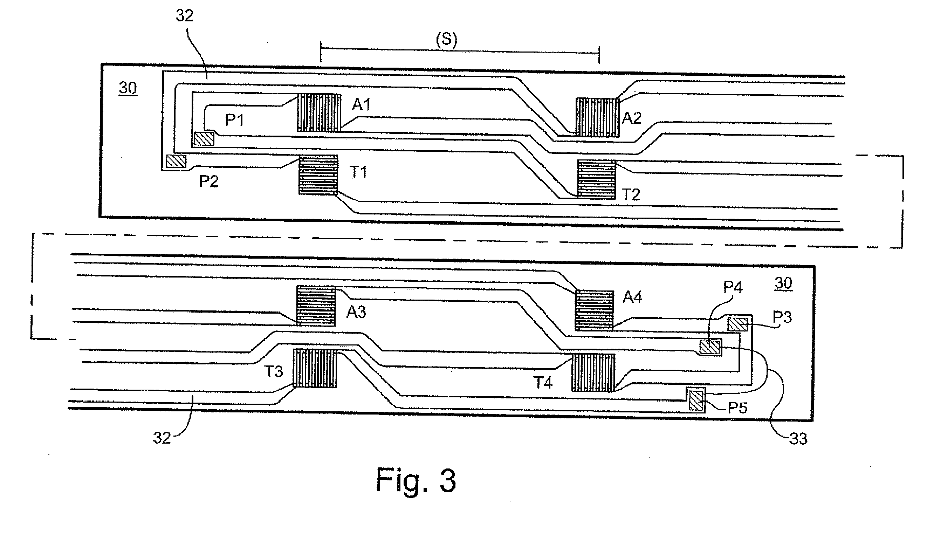

Figure 3 illustrates first and second strain gauge pairs and associated Wheatstone bridge circuitry coupled to a continuous backing according to one embodiment described herein. As illustrated in Figure 3, four pairs of first and second strain gauges (A1, T1; A2, T2; A3, T3; A4, T4) are coupled to the continuous backing (30). As described herein, first strain gauges (A1, A2, A3, A4) are operable to respond to axial strain while second strain gauges (T1, T2, T3, T4) are operable to respond to transverse strain. The four pairs of first and second strain gauges (A1, T1; A2, T2; A3, T3; A4, T4) have a spacing (S) along the continuous backing (30) commensurate with achieving alignment of the pairs with load guides on a load receiving surface when the continuous backing (30) is coupled to the load bearing column of a load cell. In one embodiment, for example, the four pairs of first and second strain gauges (A1, T1; A2, T2; A3, T3; A4, T4) have a spacing (S) along the continuous backing aligning each pair with a respective load guide (12) of Figure 2. The four pairs of first and second strain gauges (A1, T1; A2, T2; A3, T3; A4, T4) are connected by conductive paths (32) in conjunction with connection pads (P1-P5) in a Wheatstone bridge configuration. The Wheatstone bridge circuit (32) is completed by a temperature compensation wire or resistor (33) in a jumper configuration between connection pads P4 and P5.

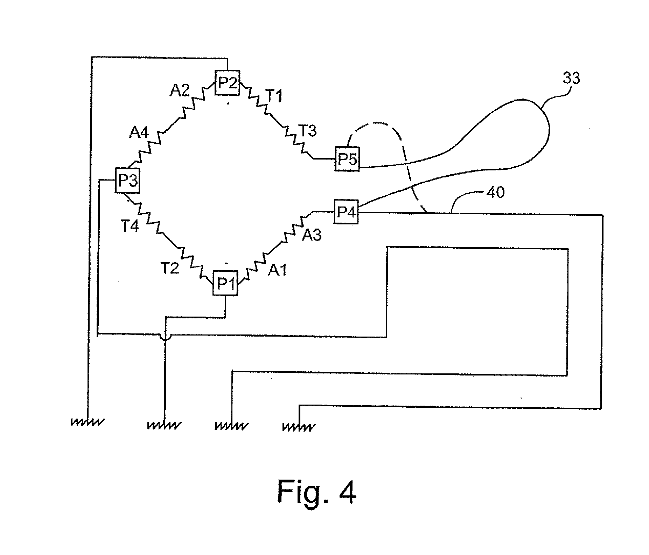

Figure 4 illustrates a diagram of the Wheatstone bridge circuit incorporating the four pairs of first and second strain gauges of Figure 3. Axial first strain gauges (A1, A3; A2, A4) are arranged in opposite legs of the Wheatstone bridge. Similarly, transverse strain gauges (T1, T3; T2, T4) are arranged in opposite legs of the Wheatstone bridge. Additionally, the temperature compensation wire or resistor (33) of Figure 3 can be electrically connected to external processing circuitry (40) in two different arrangements, depending on the desired sign of the temperature compensation or correction. In one embodiment, the temperature compensation wire or resistor (33) is connected to external processing circuitry (40) at connection pad P4. In another embodiment, the temperature compensation wire or resistor (33) is connected to external processing circuitry (40) at connection pad P5 (dashed line) resulting in a switch of the sign of the temperature compensation or correction value.

### III. Apertured Load Cell

In another aspect, a column load cell described herein comprises a load receiving surface and a load bearing column adjacent to the load receiving surface, the load bearing column comprising a plurality of surfaces separated by apertures in the load bearing column. A plurality of first strain gauges are coupled to the surfaces of the load bearing column separated by the apertures, wherein the first strain gauges are operable to determine axial strain. In some embodiments, the column load cell further comprises a plurality of second strain gauges coupled to the surfaces of the load bearing column separated by the apertures, wherein the second strain gauges are operable to determine transverse strain.

As illustrated further herein, the apertures in the load bearing column direct the path of an applied load under the first and second strain gauges coupled to the surfaces of the load bearing column defined by the apertures. In some embodiments, all or substantially all of the applied load is directed through the load bearing column under the first and second strain gauges. In directing substantially all of the applied load through the load bearing column under the first strain gauges and the second strain gauges, the apertures can mitigate or inhibit load passing through the load bearing column undetected.

In some embodiments, the number of surfaces separated by the apertures in the load bearing column is at least 4. In some embodiments, an even number of surfaces greater than 4 are separated by the apertures in the load bearing column. In some embodiments, the number of surfaces separated by apertures in the load bearing column is a multiple of 4. Additionally, in some embodiments, at least one surface of the load bearing column is in facing opposition to another surface of the load bearing column. In some embodiments, each surface of the load bearing column is in facing opposition to another surface of the load bearing column. In some embodiments, each surface separated by the apertures in the load bearing column comprises first and second strain gauges.

In some embodiments, the load bearing column comprises at least four apertures. In some embodiments, the load bearing column comprises an even number of apertures greater than 4. In some embodiments, the number of apertures in the load bearing column is a multiple of 4. Moreover, in some embodiments, at least one aperture in the load bearing column is in facing opposition to another aperture across the load bearing column. In some embodiments, each aperture in the load bearing column is in facing opposition to another aperture in the load bearing column.

In some embodiments, the load receiving surface of the load cell comprises a plurality of load guides, wherein the load guides are aligned or substantially aligned with the first and second strain gauges. In being aligned with first and second strain gauges, the load guides, in some embodiments, are also aligned or substantially aligned with the surfaces of the load bearing column defined by the apertures. The load guides, in some embodiments, work in conjunction with the apertures in directing substantially all of an applied load through the load bearing column under the first and second strain gauges. The load guides can comprise any structure or configuration described herein for load guides.

In some embodiments, the first strain gauges and the second strain gauges are adjacent to one another on surfaces of the load bearing column defined by the apertures. In some embodiments, for example, the first and second strain gauges are adjacent to one another in a vertical format as illustrated in Figure 1 herein. In some embodiments, the first and the second strain gauges are adjacent to one another in a lateral format.

Additionally, in some embodiments, the load bearing column of a load cell comprises interior surfaces and exterior surfaces. The first and second strain gauges, in some embodiments, are coupled to exterior surfaces of the load bearing column. In some embodiments, the first and second strain gauges are coupled to interior surfaces of the load bearing column. In some embodiments, the first and second strain gauges are coupled to interior and exterior surfaces of the lead bearing column.

In some embodiments, the load cell further comprises a Wheatstone bridge circuit incorporating the first strain gauges and the second strain gauges. In some embodiments, the Wheatstone bridge circuit is a full Wheatstone bridge circuit. The Wheatstone bridge circuit, in some embodiments, comprises a temperature compensation architecture.

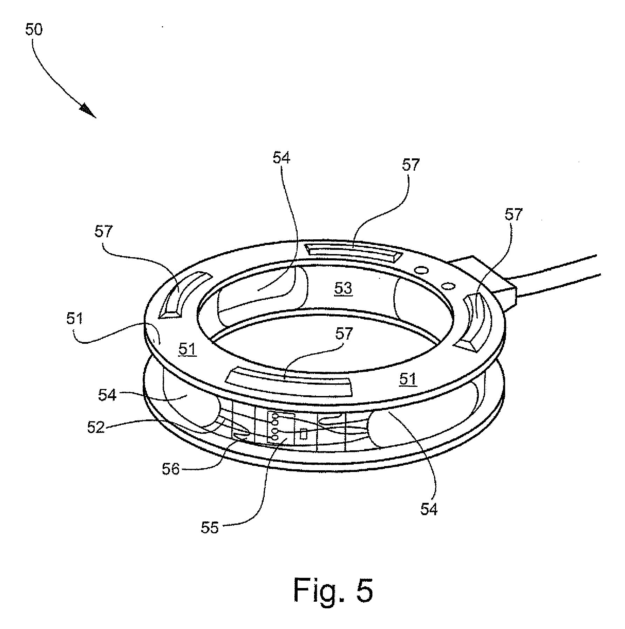

Figure 5 illustrates a perspective view of a column load cell according to one embodiment described herein. As illustrated in Figure 5, the column load cell (50) comprises a load receiving surface (51) and a load bearing column (52) adjacent to the load receiving surface (51). The load bearing column (52) comprises four surfaces (53) separated by apertures (54) in the load bearing column (52). In the embodiment of Figure 5, each surface (53) separated by apertures (54) in the load bearing column (52) is in facing opposition to another surface (53). Moreover, each aperture (54) in the load bearing column (52) is in facing opposition to another aperture (54) in the load bearing column (52). First and second strain gauge pairs (55) are coupled to the four surfaces (53) separated the apertures (54) in the load bearing column (52).

A full Wheatstone bridge circuit (56) incorporating the first and second strain gauge pairs (55) encircles the exterior of the load bearing column (52). The wiring of the Wheatstone bridge (56) in Figure 5 has been cut away in areas of the apertures (54) to further illustrate the apertures (54). In some embodiments, the full Wheatstone bridge circuit (56) has an architecture consistent with Figure 4 herein. In some embodiments, the Wheatstone bridge circuit incorporating the first and second strain gauge pairs (55) is coupled to a continuous backing as described hereinabove and illustrated in Figure 3.

The column load cell (50) of Figure 5 further comprises four load guides (57) on the load receiving surface (51). As described herein, the load guides (57) are aligned or substantially aligned with the first and second strain gauge pairs (55). In being aligned with a first and second strain gauge pair (55), each of the four load guides (57) is also aligned with a respective one of the four surfaces (53) separated by the apertures (54) in the load bearing column (52).

As described herein, load guides and load bearing column apertures individually or in conjunction with one another direct the path of an applied load through the load bearing column under the first strain gauges and second strain gauges. In some embodiments, substantially all of the applied load is directed through the load bearing column under the first and second strain gauges. In directing substantially all of an applied load through the load bearing column under the first and second strain gauges, the load guides and column apertures individually or in conjunction with one another can mitigate or inhibit load passing through the load bearing column undetected or only partially detected.

In some embodiments, substantially all of the applied load is directed through the load bearing column under the first and second strain gauges irrespective of whether the load is applied on-center or off-axis/asymmetrically. In some embodiments wherein the load is applied off-axis or asymmetrically to the load cell, first and second strain gauges aligned with load guides receiving greater load will sense or measure greater amounts of strain in comparison with first and second strain gauges aligned with load guides receiving reduced load. However, the sum of the strains measured by all of the first and second strain guides remains proportional to the applied load.

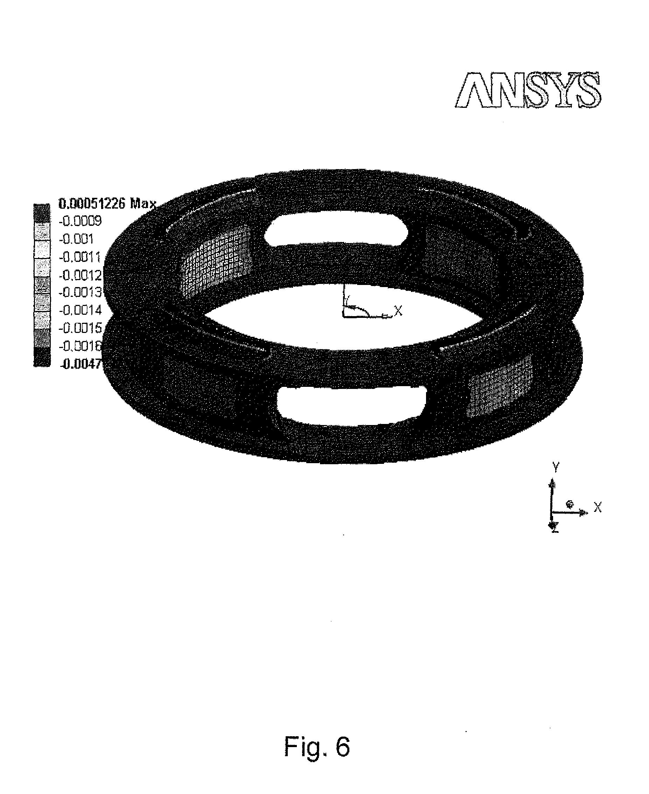

Figure 6 illustrates compressive strain fields of a center loaded column load cell having the construction discussed and illustrated in Figure 5. As demonstrated in Figure 6, the load guides in conjunction with the apertures in the load bearing column direct substantially all of the applied load through the load bearing column under locations of the first and second strain gauges for measurement.

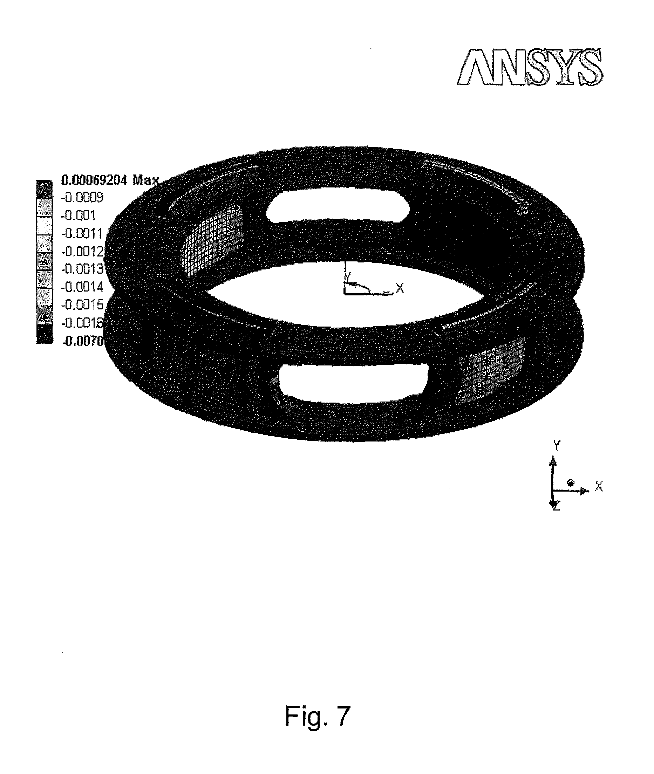

Figure 7 illustrates compressive strain fields of an asymmetrically loaded column load cell having the construction discussed and illustrated in Figure 5. Even with the asymmetrical loading, the load guides and apertures in the load bearing column direct substantially all of the applied load through the load bearing column under locations of the first and second strain gauges for measurement. As discussed herein, the sum of the strains measured by all of the first and second strain guides remains proportional to the applied load.

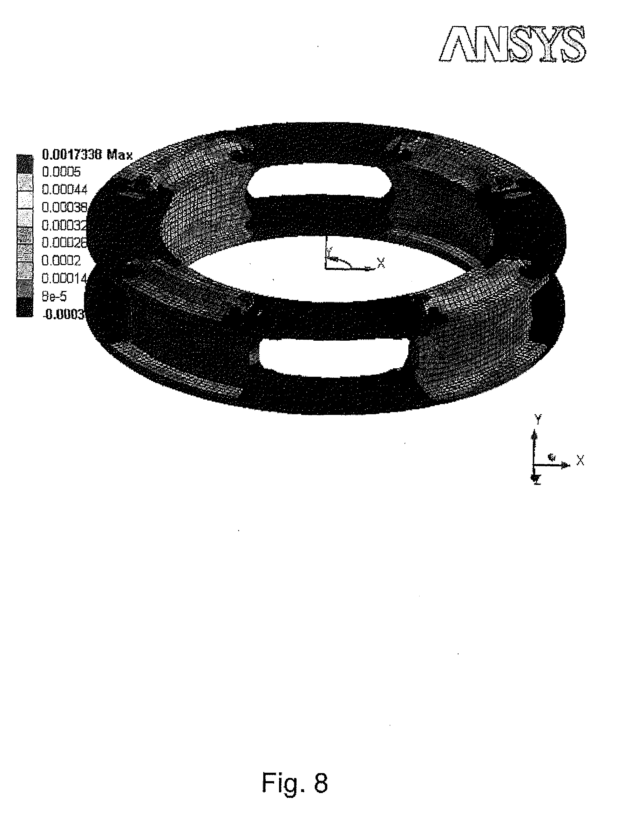

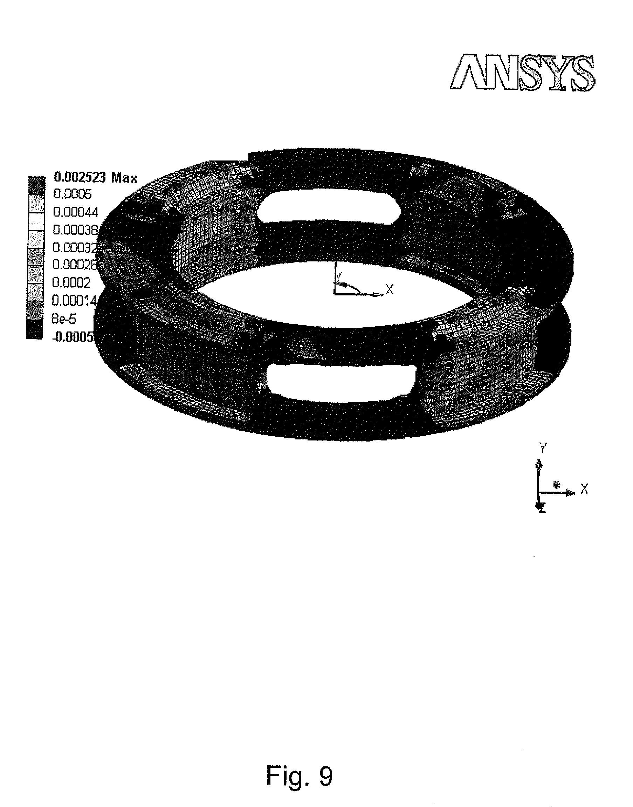

Figure 8 illustrates transverse strain fields of a center loaded column load cell having the construction discussed and illustrated in Figure 5 while Figure 9 illustrates transverse strain fields of an asymmetrically loaded column load cell having the construction discussed and illustrated in Figure 5.

Load cells described herein can be constructed of any material not inconsistent with the objectives of the present invention. In some embodiments, load cells described herein are constructed of various steels, including stainless steels. In some embodiments, load cells are constructed of various alloys. Additionally, in some embodiments, load cells can be constructed of one or more polymeric materials including, but not limited to, fiber-reinforced polymeric materials.

The load cell constructions illustrated in Figures 2 and 5 herein display a load bearing column having an annular or ring cross-sectional profile. In some embodiments, a load bearing column can have any cross-sectional geometry not inconsistent with the objectives of the present invention. In some embodiments, for example, the load bearing column of a load cell described herein has a polygonal shape or an elliptical shape. In some embodiments, a load bearing column of a load cell described herein defines an open interior. As illustrated in Figures 2 and 5, the annular load bearing column defines an open interior.

### IV. Load Transfer Apparatus

In another aspect, a load transfer apparatus for use with various load cell constructions is described herein. In some embodiments, a load transfer apparatus comprises a load transfer surface comprising a plurality of load guides, the load guides having a spacing on the surface aligning or substantially aligning the load guides with strain gauges of a load cell coupled to the apparatus. In some embodiments, the load guides comprise structures projecting from the load transfer surface. The structures, in some embodiments, project above the load receiving surface. In some embodiments, load guides of a load transfer apparatus can have any structure or configuration described herein for load guides of a column load cell.

### V. Methods of Measuring Loads

In another aspect, methods for measuring a load are described herein. In some embodiments, a method of measuring a load comprises providing a column load cell comprising a load bearing column, a plurality of first strain gauges and second strain gauges coupled to surfaces of the load bearing column, the first strain gauges operable to determine axial strain and the second strain gauges operable to determine transverse strain, and a load receiving surface comprising a plurality of load guides aligned or substantially aligned with the first strain gauges and the second strain gauges. A load is applied to the column load cell and the path of the applied load is directed through the load bearing column under the first strain gauges and the second strain gauges with the load guides, wherein the first strain gauges and the second strain gauges sense strain resulting from the applied load. In some embodiments, substantially all of the applied load is directed through the load bearing column under the first strain gauges and the second strain gauges by the load guides. In some embodiments, the load is applied to the column load cell asymmetrically or in an off-axis manner.

In another embodiment, a method of measuring a load comprises providing a column load cell comprising a load receiving surface, a load bearing column adjacent to the load receiving surface, the load bearing column comprising a plurality of surfaces separated by apertures in the load bearing column, and a plurality of first strain gauges and second strain gauges coupled to the surfaces separated by the apertures, wherein the first strain gauges are operable to determine axial strain and the second strain gauges are operable to determine transverse strain. A load is applied to the column load cell and passed through the load bearing column under the first strain gauges and the second strain gauges, wherein the first and second strain gauges sense strain resulting from the applied load. In some embodiments, substantially all of the applied load is directed through the load bearing column under the first strain gauges and the second strain gauges.

In some embodiments, the load receiving surface of the load cell comprises a plurality of load guides, wherein the load guides are aligned or substantially aligned with the first and second strain gauges. In being aligned with the first and second strain gauges, the load guides, in some embodiments, are also aligned or substantially aligned with the surfaces of the load bearing column defined by the apertures. The load guides, in some embodiments, work in conjunction with the apertures in directing substantially all of an applied load through the load bearing column under the first and second strain gauges.

In another embodiment, a method of measuring a load comprises providing a column load cell comprising a load bearing column and a plurality of strain gauges coupled to the load bearing column and coupling a load transfer apparatus to the load cell, the load transfer apparatus comprising a load transfer surface comprising a plurality of load guides, the load guides having a spacing on the load transfer surface substantially aligning the load guides with the strain gauges of the load cell. A load is applied to the load transfer apparatus and passed through the load transfer apparatus to the load cell. The path of the applied load is directed with the load guides through the load bearing column of the load cell under the first strain gauges and the second strain gauges, wherein the first and second strain gauges sense strain resulting from the applied load. In some embodiments, substantially all of the load is directed through the load bearing column under the first and second strain gauges by the load guides of the load transfer apparatus.

In some embodiments, methods of measuring a load described herein further comprise adding the strains sensed by the first strain gauges and the second strain gauges to provide a strain summation, wherein the strain summation is proportional to the applied load. In some embodiments of methods of measuring a load, the load cell can have any construction described herein.

### VI. Methods of Making Load Cells

In another aspect, methods of making a load cell are described herein. In some embodiments, a method of making a load cell comprises providing a load bearing column and a load receiving surface adjacent to the load bearing column, coupling a plurality of strain gauges to surfaces of the load bearing column and providing a plurality of load guides on the load receiving surface, the load guides substantially aligned with the strain gauges.

In another embodiment, a method of making a load cell comprises providing a load bearing column and a load receiving surface adjacent to the load bearing column, forming a plurality of apertures in the load bearing column to provide a plurality of separated surfaces and coupling a plurality of strain gauges to the surfaces of the load bearing column separated by the apertures.

Various embodiments of the invention have been described in fulfilment of the various objects of the invention. It should be recognized that these embodiments are merely illustrative of the principles of the present invention. Numerous modifications and adaptations thereof will be readily apparent to those skilled in the art without departing from the spirit and scope of the invention.

## Claims

1. A column load cell comprising:
a load bearing column;
a plurality of first strain gauges coupled to surfaces of the load bearing column for determining axial strain; and
a load receiving surface comprising a plurality of load guides, the load guides substantially aligned with the first strain gauges.

2. The column load cell of claim 1, wherein the load guides comprise structures projecting from the load receiving surface.

3. The column load cell of claim 2, wherein the structures comprise lugs.

4. The column load cell of claim 1, wherein the load guides are continuous or integral with the load receiving surface.

5. The column load cell of claim 1, wherein the load guides are discontinuous with the load receiving surface.

6. The column load cell of clam 1 further comprising a plurality of second strain gauges coupled to the surfaces of the load bearing column for determining transverse strain, wherein the load guides are substantially aligned with the second strain gauges.

7. The column load cell of claim 6, wherein the second strain gauges are adjacent to the first strain gauges.

8. The column load cell of the claim 6 further comprising a Wheatstone bridge circuit incorporating the first strain gauges and the second strain gauges.

9. The column load cell of claim 8, wherein the first strain gauges, second strain gauges and connecting circuitry of the Wheatstone bridge are coupled to a continuous backing.

10. The column load cell of claim 9, wherein the Wheatstone bridge circuit is completed by an architecture comprising a temperature compensation wire or resistor.

11. The column load cell of claim 10, wherein the architecture permits switching the sign of the temperature compensation.

12. The column load cell of claim 11, wherein the architecture comprises a plurality of connection pads for connecting external circuitry to the temperature compensation wire or resistor.

13. The column load cell of claim 6, wherein the surfaces of the load bearing column are separated by apertures in the load bearing column.

14. The column load cell of claim 13, wherein at least one of the apertures in the load bearing column is in facing opposition to another aperture in the load bearing column.

15. The column load cell of claim 13, wherein at least one surface comprising first and second strain gauges is in facing opposition to another surface comprising first and second strain gauges.

16. The column load cell of claim 13, wherein the number of surfaces separated by the apertures in the load bearing column is 4 or an even number greater than 4.

17. The column load cell of claim 16, wherein each surface of the load bearing column separated by the apertures comprises a first strain gauge and a second strain gauge.
